# EUROPÄISCHE PATENTANMELDUNG

(11) **EP 2 448 233 A1**
(43) Veröffentlichungstag der Anmeldung: **02.05.2012**
(21) Anmeldenummer: 11006404.5
(22) Anmeldetag: 04.08.2011
(51) Int. Cl.: H04M 11/02, H04N 7/18

(54) **Türstation eines Haus-Kommunikationssystems**

(30) Priorität: 27.10.2010 DE 102010049821
(71) Anmelder: ABB AG, 68309 Mannheim (DE)
(72) Erfinder: Bigalke, Olaf, 58638 Iserlohn (DE); Platte, Jörg, 44149 Dortmund (DE); Kruppa, Christian, 44649 Herne (DE); Zapp, Robert, 58579 Schalksmühle (DE); Schramm, Peter, 44269 Dortmund (DE)

(57) **Zusammenfassung**

Es wird eine Türstation eines Haus-Kommunikationssystems mit einer Vielzahl von Wohnungsstationen (8 ― 12) vorgeschlagen, wobei die Türstation (1) ein Anzeige-/Betätigungsfeld (3) mit Klingelknöpfen (13, 15) und mit Namen oder Namensschildern (14) oder Bezeichnungen, insbesondere Ziffern, für die Zuordnung zu einer bestimmten Wohnung mit bestimmter Wohnungsstation (8 ― 12) des Hauses aufweist,
● wobei die Türstation (1) ein Mikrofon (2) inklusive Sprachverarbeitung, einen Referenzspeicher (4) zur Abspeicherung aller Namen der Bewohner und eine mit Mikrofon (2) und Referenzspeicher (4) verbundene Verarbeitungs-/Ansteuereinheit (5) inklusive Namenvergleichseinrichtung aufweist,
● wobei im Referenzspeicher (4) die Zuordnung zwischen einem bestimmten Namen und einer bestimmten Wohnungsstation (8 ― 12) abgespeichert ist,
● wobei mittels der Verarbeitungs-/Ansteuereinheit (5) eine Koinzidenzauswertung zwischen einem vom Mikrofon (2) erfassten, von einem Besucher aktuell gesprochenen Namen eines zu besuchenden Bewohners und den abgespeicherten Namen des Referenzspeichers (4) erfolgt,
● wobei die Verarbeitungs-/Ansteuereinheit (5) bei einer festgestellten Übereinstimmung zwischen einem bestimmten gespeicherten Namen und dem aktuell gesprochenen Namen das Anzeige-/Betätigungsfeld (3) ansteuert, um derart den Klingelknopf (13, 15) oder den Namen oder das Namensschild (14) oder die Bezeichnung, insbesondere Ziffer, welche der bestimmten Wohnungsstation (8 ― 12) und damit dem bestimmten Namen zugeordnet ist, optisch hervorzuheben.

## Beschreibung

Die Erfindung betrifft eine Türstation eines Haus-Kommunikationssystems mit einer Vielzahl von Wohnungsstationen.

Aus der DE 20 2007 018 516 U1 ist ein Türzugangssystem mit einer eine Kamera und eine Türklingel aufweisenden Türstation und mindestens einer Wohnungsstation bekannt,
- wobei die Kamera eine vor der Türstation sich befindende Person erfasst und ein entsprechendes Bild an eine Bildvergleichseinrichtung der Wohnungsstation weiterleitet,
- wobei die Wohnungsstation einen Referenzspeicher aufweist, in welchem Referenzbilder unterschiedlicher Personen hinterlegt sind,
- wobei die Wohnungsstation einen Speicher aufweist, in welchem unterschiedliche Rufsequenzen hinterlegt sind,
- wobei den unterschiedlichen Referenzbildern unterschiedliche Rufsequenzen zugeordnet sind,
- wobei die Bildvergleichseinrichtung bei Betätigung der Türklingel eine Koinzidenzauswertung hinsichtlich der Bildsignale der Kamera und der Bildsignale des Referenzspeichers durchführt,
- wobei die Bildvergleichseinrichtung den Speicher in Abhängigkeit des Ergebnisses der Koinzidenzauswertung beaufschlagt und
- wobei eine Ansteuereinheit des Speichers einen Tonerzeuger mit der dem Referenzbild zugeordneten Rufsequenz beaufschlägt.

Hierdurch ist es möglich, Familienmitgliedern und fremden Personen unterschiedliche Rufsequenzen oder unterschiedlichen Familienmitgliedern unterschiedliche Rufsequenzen zuzuordnen.

Der Erfindung liegt die Aufgabe zugrunde, eine Türstation eines Haus-Kommunikationssystems mit einer Vielzahl von Wohnungsstationen anzugeben, bei welcher einem Besucher in optimierter Form der mutmaßlich zu besuchende Bewohner angezeigt wird.

Diese Aufgabe wird erfindungsgemäß gelöst durch eine Türstation eines Haus-Kommunikationssystems mit einer Vielzahl von Wohnungsstationen, wobei die Türstation ein Anzeige-/Betätigungsfeld mit Klingelknöpfen und mit Namen oder Namensschildern oder Bezeichnungen, insbesondere Ziffern, für die Zuordnung zu einer bestimmten Wohnung mit bestimmter Wohnungsstation des Hauses aufweist,
● wobei die Türstation ein Mikrofon inklusive Sprachverarbeitung, einen Referenzspeicher zur Abspeicherung aller Namen der Bewohner und eine mit Mikrofon und Referenzspeicher verbundene Verarbeitungs-/Ansteuereinheit inklusive Namenvergleichseinrichtung aufweist,
● wobei im Referenzspeicher die Zuordnung zwischen einem bestimmten Namen und einer bestimmten Wohnungsstation abgespeichert ist,
● wobei mittels der Verarbeitungs-/Ansteuereinheit eine Koinzidenzauswertung zwischen einem vom Mikrofon erfassten, von einem Besucher aktuell gesprochenen Namen eines zu besuchenden Bewohners und den abgespeicherten Namen des Referenzspeichers erfolgt,
● wobei die Verarbeitungs-/Ansteuereinheit bei einer festgestellten Übereinstimmung zwischen einem bestimmten gespeicherten Namen und dem aktuell gesprochenen Namen das Anzeige-/Betätigungsfeld ansteuert, um derart den Klingelknopf oder den Namen oder das Namensschild oder die Bezeichnung, insbesondere Ziffer, welche der bestimmten Wohnungsstation und damit dem bestimmten Namen zugeordnet ist, optisch hervorzuheben.

Die mit der Erfindung erzielbaren Vorteile bestehen insbesondere darin, dass es dem Besucher sehr erleichtert wird, aus der Vielzahl der Bewohner eines Hauses den richtigen Bewohner auszuwählen, insbesondere bei Türstationen, bei denen keine Namensschilder, sondern lediglich mit Ziffern versehene Klingelknöpfe vorgesehen sind.

Zum Zwecke des Hervorhebens in optischer Art und Weise kann die Beleuchtung des bestimmten Klingelknopfes oder des Namens oder des Namensschilds oder der Bezeichnung, insbesondere Ziffer, welche der bestimmten Wohnungsstation und damit dem bestimmten Namen zugeordnet ist,
● verstärkt sein, d. h. heller sein als die weiteren Klingelknöpfe....
● farblich gegenüber den weiteren Klingelknöpfen....verändert sein,
● mit definierter Blinkfrequenz angesteuert sein.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1: ein Prinzipschaltbild eines Haus-Kommunikationssystems gemäß einer ersten Ausführungsform,
- Fig. 2: ein Prinzipschaltbild eines Haus-Kommunikationssystems gemäß einer zweiten Ausführungsform,
- Fig. 3: ein Anzeige-/Betätigungsfeld mit Klingelknöpfen und Namen,
- Fig. 4: ein Anzeige-/Betätigungsfeld mit Klingelknöpfen, welche mit Ziffern bezeichnet sind.

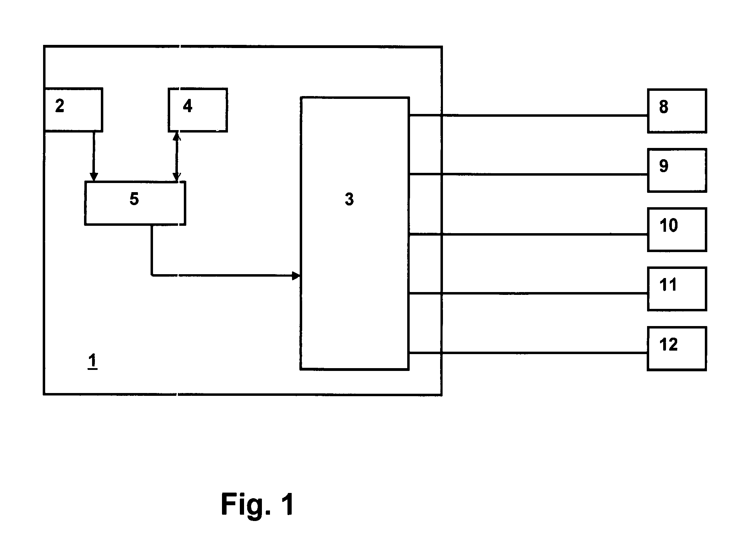

In Fig. 1 ist ein Prinzipschaltbild eines Haus-Kommunikationssystems gemäß einer ersten Ausführungsform dargestellt. Es sind eine Türstation 1 und mehrere - im konkreten Ausführungsbeispiel fünf ― mit dieser Türstation 1 verbundene Wohnungsstationen 8, 9, 10, 11, 12 zu erkennen, wobei beliebig viele weitere Wohnungsstationen vorhanden sein können. Die Türstation 1 weist ein Anzeige-/Betätigungsfeld 3 mit Klingelknöpfen und mit Namen oder Bezeichnungen, insbesondere Ziffern auf, um es einem Besucher zu ermöglichen, die gewünschte Wohnung respektive den gewünschten Bewohner per "Knopfdruck" und damit per Klingelton respektive Rufsequenz anzuwählen. Das Anzeige-/Betätigungsfeld 3 kann beispielsweise in folgenden unterschiedlichen Ausführungsformen ausgebildet sein:
● in Form eines Displays zur Anzeige eines Namens oder einer Ziffer je Wohnung und eines integrierten Klingelknopfes je zugeordnetem Namen /zugeordneter Ziffer,
● in Form eines Touchscreens mit per Fingerdruck anwählbaren "Klingelknöpfen" und zugeordneten Namen / Ziffern,
● in Form von Klingelknöpfen, denen jeweils ein Namensschild oder ein Ziffernschild zugeordnet ist,
● in Form von Klingelknöpfen, wobei ein zugeordneter Name / eine zugeordnete Ziffer im Klingelknopf selbst integriert ist.

Von Wichtigkeit ist bei allen unterschiedlichen Ausführungsformen des Anzeige-/Betätigungsfeldes 3, dass ein bestimmter anzuwählender Klingelknopf mit zugeordnetem Namen / zugeordneter Ziffer des Anzeige-/Betätigungsfeldes 3 in besonderer Weise optisch hervorgehoben werden kann, was vorzugsweise durch eine Beleuchtungs-Maßnahme erfolgt, wie
● verstärkte (hellere) Beleuchtung eines bestimmten Klingelknopfes mit zugeordnetem Namen / zugeordneter Ziffer, während die übrigen Klingelknöpfe / Namen / Ziffern mittels einer helligkeitsreduzierten Basis-Beleuchtung beleuchtet werden,
● farblich hervorgehobene, beispielsweise rote Beleuchtung eines bestimmten Klingelknopfes mit zugeordnetem Namen / zugeordneter Ziffer, während die übrigen Klingelknöpfe / Namen / Ziffern mittels einer helligkeitsreduzierten weißen Basis-Beleuchtung beleuchtet werden,
● blinkende Beleuchtung eines bestimmten Klingelknopfes mit zugeordnetem Namen / zugeordneter Ziffer, während die übrigen Klingelknöpfe / Namen /Ziffern mittels einer helligkeitsreduzierten Dauer-Beleuchtung beleuchtet werden.

Die Türstation 1 weist des Weiteren ein Mikrofon 2 inklusive Sprachverarbeitung, einen Referenzspeicher 4 zur Abspeicherung aller Namen der Bewohner und eine Verarbeitungs-/Ansteuereinheit 5 inklusive Namenvergleichseinrichtung auf. Jeder abgespeicherte Namen ist einer bestimmten Wohnung und damit einem bestimmten Klingelknopf mit entsprechendem Namen / entsprechender Ziffer zugeordnet. Kommen einzelne Namen mehrfach vor, sind zusätzlich die jeweiligen Vornamen abzuspeichern.

Nachdem ein Besucher vor der Türstation 1 steht, nennt er den Namen des zu besuchenden Bewohners. Es erfolgt eine Aufbereitung der Spracheingabe mittels des Mikrofons inklusive der Sprachverarbeitung, um derart den aktuell gesprochenen Namen festzustellen. Im Zusammenwirken mit dem Referenzspeicher 4 erfolgt seitens der Verarbeitungs-/Ansteuereinheit 5 eine Koinzidenzauswertung, d. h. die gespeicherten Namen werden mit dem aktuell gesprochenen Namen auf Übereinstimmung überprüft. Sobald eine Übereinstimmung zwischen einem bestimmten gespeicherten Namen und dem aktuell gesprochenen Namen festgestellt wird, erfolgt eine dementsprechende Ansteuerung des Anzeige-/Betätigungsfeldes 3 seitens der Verarbeitungs-/Ansteuereinheit 5, d. h. der dem bestimmten gespeicherten Namen zugeordnete bestimmte Klingelknopf mit entsprechendem Namen / entsprechender Ziffer wird beaufschlagt und in besonderer Weise hervorgehoben, was vorzugsweise durch eine der oben erläuterten Beleuchtungs-Maßnahmen erfolgt.

Nachfolgend drückt der Besucher auf den in optischer Weise hervorgehobenen Klingelknopf, wodurch der Klingelton in der zugeordneten Wohnung ausgelöst wird.

Weisen mehrere Bewohner den gleichen Namen auf, so werden auch mehrere zugeordnete Klingelknöpfe mit entsprechendem Namen / entsprechender Ziffer beaufschlagt und in besonderer Weise optisch hervorgehoben. Der Besucher trifft eine Auswahl, bevor er den richtigen Klingelknopf drückt.

Die Abspeicherung der Namen der Bewohner und die entsprechende Zuordnung zu einer bestimmten Wohnung erfolgt während einer Einlernphase mittels der Konfiguration Mikrofon 2 + Referenzspeicher 4 + Verarbeitungs-/Ansteuereinheit 5. Bei Auszug eines Bewohners und Einzug eines neuen Bewohners erfolgt ein entsprechendes "Update" des Referenzspeichers 4.

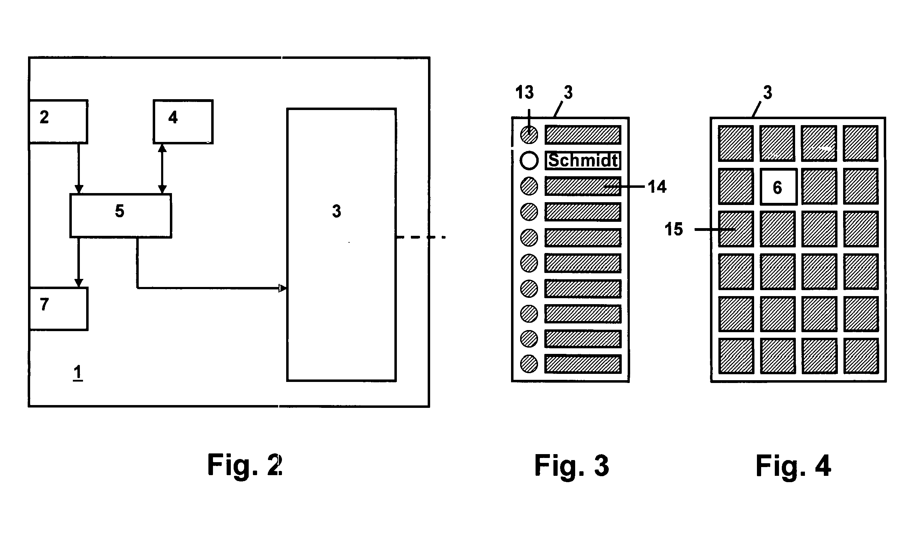

In Fig. 2 ist ein Prinzipschaltbild eines Haus-Kommunikationssystems gemäß einer zweiten Ausführungsform dargestellt. Die Konfiguration entspricht der in Fig. 1 dargerstellten Schaltung, jedoch ist zusätzlich ein Lautsprecher 7 an die Verarbeitungs-/Ansteuereinheit 5 angeschlossen. Dies ermöglicht eine gezielte Rückfrage, d. h. nach erfolgter Koinzidenzauswertung und dem Auffinden mindestens eines entsprechenden Namens erfolgt eine Rückfrage über den in der Türstation 1 befindlichen Lautsprecher 7, um abzuklären,
● ob der Name richtig verstanden worden ist,
● ob nachfolgend die Ruffunktion (Klingelton/Rufsequenz ertönt in der gesuchten / erkannten Wohnungsstation) ausgelöst werden soll.

Der Besucher antwortet mittels gezielter Spracheingaben "JA" oder "NEIN", worauf gegebenenfalls, d. h. in Abhängigkeit der Antwort, die gewünschte Funktion über die Verarbeitungs-/Ansteuereinheit 5 veranlasst wird. Ist der Name "Schmidt" beispielsweise mehrfach vorhanden, so erfolgt z. B. eine gezielte Rückfrage unter Einbezug der unterschiedlichen, zum Namen "Schmidt" abgespeicherten Vornamen:
"Ist Herr Thomas Schmidt gemeint?"

Antwortet der Besucher mit "JA", so erfolgt die nächste Rückfrage:
"Soll nun der Klingelton ausgelöst werden?"

Ist Herr Thomas Schmidt nicht gemeint, so erfolgt z. B. die nächste Rückfrage:
"Ist Frau Elke Schmidt gemeint?"

Auf diese Weise ist eine gezielte Suche des zu besuchenden Bewohners möglich.

In Fig. 3 ist ein Anzeige-/Betätigungsfeld mit Klingelknöpfen und Namen dargestellt. Bei diesem Anzeige-/Betätigungsfeld 3 sind beispielhaft zehn Klingelknöpfe 13 vorhanden und untereinander angeordnet, wobei jedem dieser Klingelknöpfe ein eigenes Namenschild oder ein eigener Name 14 zugeordnet ist. Beim gezeigten Fall ist der zweite Klingelknopf von oben und/oder das zweite Namensschild von oben respektive der Name "Schmidt" hervorgehoben, z. B. mittels einer im Vergleich zu den übrigen Klingelknöpfen und Namensschildern respektive Namen helleren Beleuchtung.

In Fig. 4 ist ein Anzeige-/Betätigungsfeld mit Klingelknöpfen dargestellt, welche mit integrierten Ziffern bezeichnet sind. Bei diesem Anzeige-/Betätigungsfeld 3 sind beispielhaft vierundzwanzig Klingelknöpfe 15 in Form einer Matrix mit sechs Zeilen und vier Spalten angeordnet. Beim gezeigten Fall ist der Klingelknopf "6" in der zweiten Spalte der zweiten Zeile hervorgehoben, z. B. mittels einer im Vergleich zu den übrigen Klingelknöpfen helleren Beleuchtung.

Selbstverständlich können die Türstation 1 bzw. die Wohnungsstationen 8 ― 12 darüber hinaus auch mit weiteren Komponenten eines Haus-Kommunikationssystems versehen sein, wie Kamera inklusive Bildverarbeitung, Display zur Anzeige des Besuchers, Betätigungstaste für Türöffner usw., was im vorstehend behandelten Zusammenhang jedoch nicht weiter von Bedeutung ist.

### Bezugszeichenliste

- 1: Türstation
- 2: Mikrofon inklusive Sprachverarbeitung
- 3: Anzeige-/Betätigungsfeld mit Klingelknöpfen und mit Namen oder Bezeichnungen, insbesondere Ziffern
- 4: Referenzspeicher für hinterlegte Namen
- 5: Verarbeitungs-/Ansteuereinheit inklusive Namenvergleichseinrichtung
- 6: -
- 7: Lautsprecher
- 8: Wohnungsstation
- 9: Wohnungsstation
- 10: Wohnungsstation
- 11: Wohnungsstation
- 12: Wohnungsstation
- 13: Klingelknöpfe
- 14: Namen oder Namensschild
- 15: Klingelknöpfe, welche mit Ziffern bezeichnet sind

## Patentansprüche

1. Türstation eines Haus-Kommunikationssystems mit einer Vielzahl von Wohnungsstationen (8 ― 12), wobei die Türstation (1) ein Anzeige-/Betätigungsfeld (3) mit Klingelknöpfen (13, 15) und mit Namen oder Namensschildern (14) oder Bezeichnungen, insbesondere Ziffern, für die Zuordnung zu einer bestimmten Wohnung mit bestimmter Wohnungsstation (8 - 12) des Hauses aufweist,
● wobei die Türstation (1) ein Mikrofon (2) inklusive Sprachverarbeitung, einen Referenzspeicher (4) zur Abspeicherung aller Namen der Bewohner und eine mit Mikrofon (2) und Referenzspeicher (4) verbundene Verarbeitungs-/Ansteuereinheit (5) inklusive Namenvergleichseinrichtung aufweist,
● wobei im Referenzspeicher (4) die Zuordnung zwischen einem bestimmten Namen und einer bestimmten Wohnungsstation (8 ― 12) abgespeichert ist,
● wobei mittels der Verarbeitungs-/Ansteuereinheit (5) eine Koinzidenzauswertung zwischen einem vom Mikrofon (2) erfassten, von einem Besucher aktuell gesprochenen Namen eines zu besuchenden Bewohners und den abgespeicherten Namen des Referenzspeichers (4) erfolgt,
● wobei die Verarbeitungs-/Ansteuereinheit (5) bei einer festgestellten Übereinstimmung zwischen einem bestimmten gespeicherten Namen und dem aktuell gesprochenen Namen das Anzeige-/Betätigungsfeld (3) ansteuert, um derart den Klingelknopf (13, 15) oder den Namen oder das Namensschild (14) oder die Bezeichnung, insbesondere Ziffer, welche der bestimmten Wohnungsstation (8 ― 12) und damit dem bestimmten Namen zugeordnet ist, optisch hervorzuheben.

2. Türstation nach Anspruch 1, **dadurch gekennzeichnet, dass** die Beleuchtung des bestimmten Klingelknopfes (13, 15) oder des Namens oder des Namensschilds (14) oder der Bezeichnung, insbesondere Ziffer, welche der bestimmten Wohnungsstation (8 ― 12) und damit dem bestimmten Namen zugeordnet ist, verstärkt ist.

3. Türstation nach Anspruch 1, **dadurch gekennzeichnet, dass** die Beleuchtung des bestimmten Klingelknopfes (13, 15) oder des Namens oder des Namensschilds (14) oder der Bezeichnung, insbesondere Ziffer, welche der bestimmten Wohnungsstation (8 ― 12) und damit dem bestimmten Namen zugeordnet ist, farblich verändert ist.

4. Türstation nach Anspruch 1, **dadurch gekennzeichnet, dass** die Beleuchtung des bestimmten Klingelknopfes (13, 15) oder des Namens oder des Namensschilds (14) oder der Bezeichnung, insbesondere Ziffer, welche der bestimmten Wohnungsstation (8 ― 12) und damit dem bestimmten Namen zugeordnet ist, mit definierter Blinkfrequenz angesteuert ist.

5. Türstation nach einem der vorstehenden Ansprüche, **dadurch gekennzeichnet, dass** der Name oder die Bezeichnung, insbesondere Ziffer, im Klingelknopf (15) selbst integriert ist.

6. Türstation nach einem der vorstehenden Ansprüche, **dadurch gekennzeichnet, dass** zusätzlich ein Lautsprecher (7) an die Verarbeitungs-/Ansteuereinheit (5) angeschlossen ist, wodurch gezielte Rückfragen an den Besucher ermöglicht sind.
